# FASCICULE DE BREVET EUROPEEN

(11) **EP 1 173 835 B1**
(45) Date de publication et mention de la délivrance du brevet: **04.02.2004**
(21) Numéro de dépôt: 00922779.4
(22) Date de dépôt: 28.04.2000
(51) Int. Cl.: G07F 7/10, G07F 7/08

(54) **PROCEDE DE GESTION DE COMMANDES DANS PLUSIEURS FICHIERS D'APPLICATION ET CARTE A PUCE POUR LA MISE EN OEUVRE DU PROCEDE**
VERFAHREN ZUR BEFEHLVERWALTUNG IN MEHREREN ANWENDUNGSDATENBESTÄNDEN UND CHIPKARTE ZUR DURCHFÜHRUNG DES VERFAHRENS
METHOD FOR CONTROLLING COMMANDS IN SEVERAL APPLICATION FILES AND CHIP CARD FOR CARRYING OUT SAID METHOD

(30) Priorité: 29.04.1999 FR 9905444
(43) Date de publication de la demande: 23.01.2002
(73) Titulaire: SCHLUMBERGER Systèmes, 92120 Montrouge (FR)
(72) Inventeur: GRELLIER, Stéphane, F-45620 Isdes (FR)
(74) Mandataire: den Braber, Gerard Paul
(86) Numéro de dépôt international: PCT/FR2000/001137
(87) Numéro de publication internationale: WO 2000/067212

(56) Documents cités:
- EP-A- 0 644 513
- EP-A- 0 717 339
- US-A- 4 882 474
- US-A- 5 600 818

## Description

L'invention concerne un procédé de gestion de commandes dans plusieurs fichiers d'application et une carte à puce adaptée à gérer des commandes dans plusieurs fichiers d'application.

On connaît des procédés de gestion de commandes adaptés à gérer des commandes dans plusieurs fichiers d'application. Ces procédés sont par exemple adaptés à gérer des commandes telles que créer ou ouvrir ou supprimer un sous-fichier dans un premier fichier concernant une première application ou telles que créer ou ouvrir ou supprimer un sous-fichier d'un deuxième fichier concernant une deuxième application. Les moyens mettant en oeuvre de tels procédés sont appelés « operating system » en anglais.

Un utilisateur qui souhaite ordonner l'exécution d'une telle opération doit satisfaire à la condition d'accès associée à la commande dans le fichier d'application.

Dans certains domaines d'application, ces conditions d'accès ont été normalisées. On connaît ainsi par exemple la norme EN 726-3 pour les procédés de gestion de commandes dans les cartes à puces. Cette norme mentionne par exemple une condition d'accès notée « ALW » pour laquelle l'utilisateur n'a besoin de satisfaire à aucune condition : ainsi une opération dans un fichier d'application, à laquelle est associée la condition d'accès « ALW » sera toujours exécutée si l'utilisateur l'ordonne. Cette norme mentionne aussi une condition d'accès notée « NEV » : si l'utilisateur ordonne l'exécution d'une opération dans un fichier d'application, à laquelle est associée la condition d'accès « NEV », cette opération ne sera pas exécutée. Cette norme mentionne également, entre autres, des conditions d'accès notées « CHV1 » et « CHV2 ».

Les procédés de gestion de commandes dans plusieurs fichiers d'application connus ne permettent pas de gérer conjointement des commandes pour des fichiers d'application différents. Ainsi, lorsqu'un opérateur fait exécuter des commandes dans un premier fichier d'application. qu'il passe à un deuxième fichier d'application pour y faire exécuter des commandes, et qu'il retourne au premier fichier d'application, il doit satisfaire à nouveau aux conditions d'accès pour faire exécuter, dans le premier fichier d'application, des commandes analogues à celles qu'il a fait exécuter initialement.

L'objet de l'invention est de proposer un procédé de gestion de commandes dans plusieurs fichiers d'application, mis en oeuvre aisément et en toute sécurité, ayant un coût réduit et permettant de résoudre ce problème.

Plus précisément, l'invention concerne un procédé de gestion de commandes dans plusieurs fichiers d'application selon la revendication 1.

De préférence, un utilisateur ayant ordonné l'exécution d'une commande dans un fichier d'application,
on recherche si la condition d'accès correspondant à ladite commande est mémorisée,
si la condition d'accès est mémorisée alors on lance l'exécution de la commande,
sinon on demande à l'utilisateur de satisfaire à la condition d'accès et alors, si l'utilisateur satisfait à la condition d'accès, on mémorise la condition d'accès et on Lance L'exécution de la commande.

Avantageusement, n désignant un entier supérieur ou égal à deux, l'utilisateur ayant satisfait à n conditions d'accès, on garde mémorisées les n dernières conditions d'accès satisfaites.

De préférence, une nouvelle condition d'accès étant satisfaite par l'utilisateur, ladite condition d'accès n'étant pas en mémoire, n conditions d'accès étant mémorisées, on supprime de la mémoire la condition d'accès la plus anciennement satisfaite et on mémorise la condition d'accès nouvellement satisfaite.

Selon un premier mode de mise en oeuvre du procédé, n est égal au nombre de conditions d'accès pour l'ensemble des commandes de tous les fichiers d'application.

Selon un deuxième mode de mise en oeuvre du procédé. n est supérieur au nombre de conditions d'accès pour l'ensemble des commandes de tous les fichiers d'application.

Selon un troisième mode de mise en oeuvre du procédé, n est inférieur au nombre de conditions d'accès pour l'ensemble des commandes de tous les fichiers d'application.

Avantageusement, un contact étant établi pour démarrer ledit procédé de gestion de commandes. le contact étant rompu, on efface toutes les conditions d'accès.

L'invention concerne également une carte à puce adaptée à gérer des commandes dans plusieurs fichiers d'application selon la revendication 9.

De préférence, un utilisateur ayant ordonné l'exécution d'une commande dans un fichier d'application, elle comporte :
- des moyens adaptés à rechercher si la condition d'accès correspondant à ladite commande est en mémoire,
- des moyens adaptés à lancer l'exécution de la commande si la condition d'accès est en mémoire,
- des moyens adaptés à demander à l'utilisateur de satisfaire à la condition d'accès si la condition d'accès n'est pas en mémoire, et
- des moyens adaptés à mémoriser la condition d'accès et à lancer l'exécution de la commande si l'utilisateur satisfait à la condition d'accès.

Avantageusement, n désignant un entier supérieur ou égal à deux, l'utilisateur ayant satisfait à n conditions d'accès, elle comporte des moyens adaptés à garder en mémoire les n dernières conditions d'accès satisfaites.

De préférence, une nouvelle condition d'accès étant satisfaite par l'utilisateur, ladite condition d'accès n'étant pas en mémoire, n conditions d'accès étant mémorisées, elle comporte des moyens adaptés à supprimer de la mémoire la condition d'accès la plus anciennement satisfaite et à mémoriser la condition d'accès nouvellement satisfaite.

Selon un premier mode de réalisation, n est égal au nombre de conditions d'accès pour l'ensemble des commandes de tous les fichiers d'application.

Selon un deuxième mode de réalisation, n est supérieur au nombre de conditions d'accès pour l'ensemble des commandes de tous les fichiers d'application.

Selon un troisième mode de réalisation, n est inférieur au nombre de conditions d'accès pour l'ensemble des commandes de tous les fichiers d'application.

Avantageusement, la carte comporte un contact et des moyens adaptés à supprimer toutes les conditions d'accès mémorisées lorsque le contact est rompu.

D'autres caractéristiques et avantages de l'invention apparaîtront au cours de la description d'un mode de réalisation qui va suivre, donné à titre d'exemple non limitatif, à l'appui des cinq figures sur lesquelles :
la figure 1 représente un tableau de mémorisation relatif à un espace mémoire dans la mémoire vive de la carte à puce adaptée à gérer des commandes dans plusieurs fichiers d'application, le tableau est représenté dans l'état initial de mémorisation,
les figures 2 à 5 sont analogues à la figure 1 pour différents états de mémorisation,
la figure 6 représente la carte et son environnement de fonctionnement,
la figure 7 représente l'organisation logique de la carte, et
la figure 8 représente un organigramme logique des étapes du procédé de l'invention.

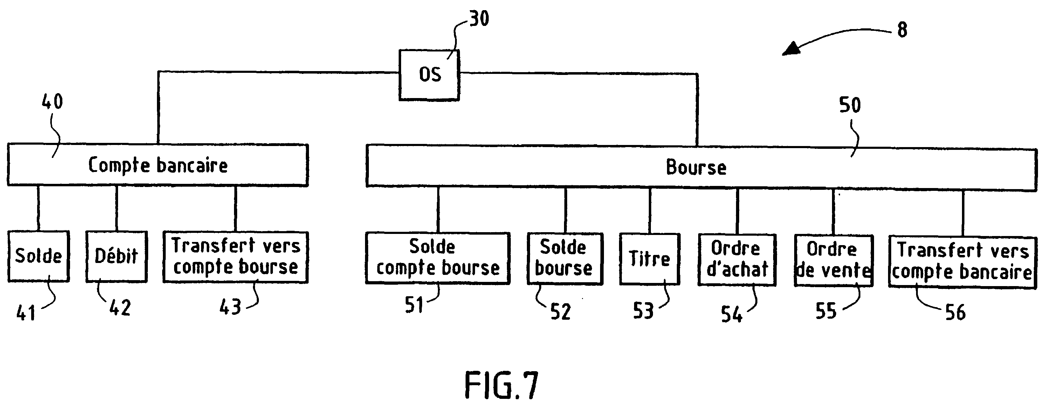

En se référant plus particulièrement à la figure 7, on va décrire l'organisation logique d'une carte 8 à puce adaptée à gérer des commandes dans plusieurs fichiers d'application.

La carte 8 comprend des moyens pour mettre en oeuvre le procédé de gestion de commandes, ce moyen est dénommé « OS » et porte la référence 3.

La carte 8 comprend deux fichiers d'application, aussi appelés répertoires.

Le premier fichier d'application est dénommé « compte bancaire » et porte la référence 40. Ce fichier d'application est prévu pour permettre à un utilisateur de gérer des données relatives à son compte bancaire.

Dans le fichier « compte bancaire », l'utilisateur peut ordonner l'exécution d'une commande dénommée « solde » portant la référence 41, d'une commande dénommée « débit » portant la référence 42 et d'une commande dénommée « transfert vers compte bourse » portant la référence 43.

La commande « solde » contient des instructions permettant à l'utilisateur de connaître le solde de son compte bancaire.

La commande « débit » contient des instructions permettant à l'utilisateur d'ordonner un mouvement de débit de son compte bancaire.

La commande « transfert vers compte bourse » permet à l'utilisateur d'ordonner le transfert d'un certain montant du compte bancaire vers un compte bourse.

Le deuxième fichier d'application est dénommé « bourse » et porte la référence 50. Ce fichier d'application est prévu pour permettre à l'utilisateur de gérer des données relatives à son portefeuille de bourse.

Dans le fichier « bourse », l'utilisateur peut ordonner l'exécution d'une commande dénommée « solde compte bourse » portant la référence 51, d'une commande dénommée « solde bourse » portant la référence 52, d'une commande dénommée « titre » portant la référence 53, d'une commande dénommée « ordre d'achat » portant la référence 54, d'une commande dénommée « ordre de vente » portant la référence 55 et d'une commande dénommée « transfert vers compte bancaire » portant la référence 56.

La commande « solde compte bourse » contient des instructions permettant à l'utilisateur de connaître le solde du compte bourse prévu pour alimenter et recevoir le montant correspondant aux achats et ventes de titres de bourse.

La commande « solde bourse » contient des instructions permettant à l'utilisateur de connaître la valeur globale des titres en bourse qu'il possède.

La commande « titre » contient des instructions permettant à l'utilisateur de connaître les titres de bourse que l'utilisateur possède.

La commande « ordre d'achat » permet à l'utilisateur de donner l'instruction d'acheter des titres de bourse.

La commande « ordre de vente » permet à l'utilisateur de donner l'instruction de vendre des titres de bourse.

La commande « transfert vers compte bancaire » permet à l'utilisateur de donner l'instruction de transférer un certain montant du compte bourse vers le compte bancaire.

Pour pouvoir effectuer les commandes « solde », « solde compte bourse », « solde bourse » ou « titre », l'utilisateur devra au préalable entrer des conditions d'accès notées « CHV1 ».

Pour pouvoir effectuer les commandes « débit », « transfert vers compte bourse », « ordre d'achat », « ordre de vente » ou « transfert vers compte bancaire », l'utilisateur devra au préalable entrer les conditions d'accès notées « CHV2 ».

La carte 8 comporte des moyens représentés par un tableau, pour garder en mémoire les conditions d'accès conjointement pour tous les fichiers d'application.

Le tableau comporte deux colonnes et quatre lignes. Le nombre de lignes est le nombre de conditions d'accès pour l'ensemble des commandes de tous les fichiers d'application : la carte comprend en effet deux fichiers d'application et chacun d'eux comporte deux conditions d'accès pour l'ensemble de ses commandes.

Lorsqu'une condition d'accès dans un fichier d'application est mémorisée, l'adresse du fichier d'application figure sur une ligne de la première colonne et ladite condition d'accès figure sur la même ligne de la deuxième colonne. A l'inverse, lorsqu'une condition d'accès dans un fichier d'application n'est pas mémorisée, l'adresse du fichier d'application ne figure sur aucune ligne de la première colonne.

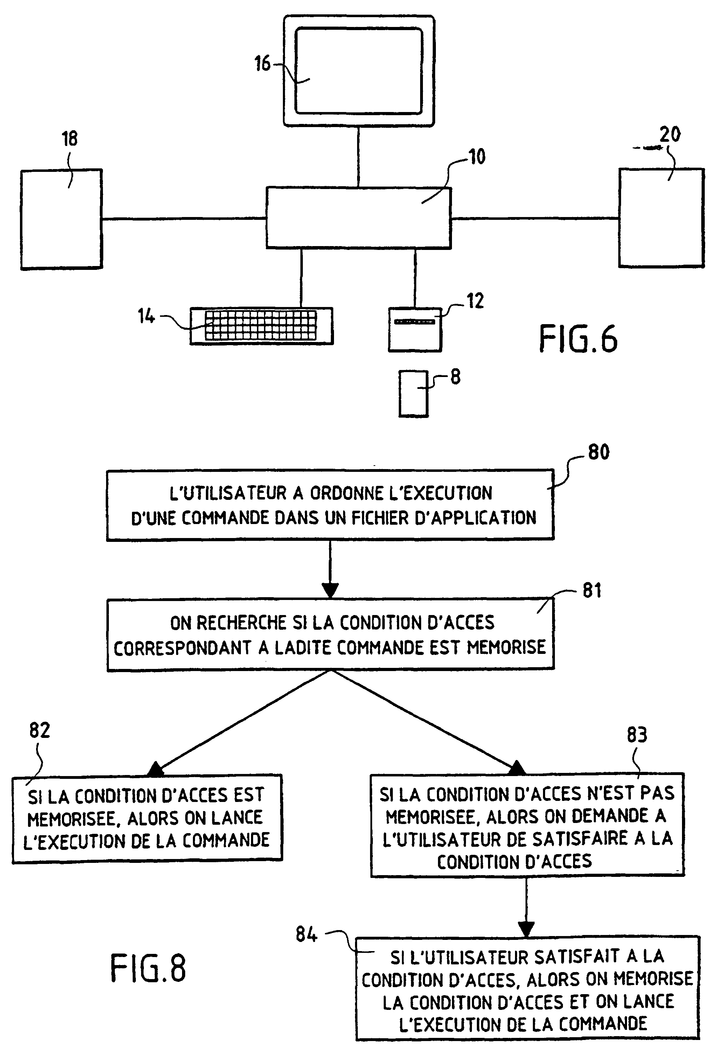

En se référant plus particulièrement à la figure 6, on a représenté la carte 8 adaptée à être insérée dans un lecteur 12. Le lecteur 12 est connecté à un ordinateur 10 relié à un clavier 14, à un écran 16 et à un distributeur 18 de billets. L'ordinateur 10 est connecté à un ordinateur central 20 adapté à mémoriser les opérations qui sont demandées.

En se référant maintenant plus particulièrement à la figure 8, on a représenté les étapes du procédé de gestion de commandes dans plusieurs fichiers d'application.

Dans la situation initiale notée 80, l'utilisateur a ordonné l'exécution d'une commande dans un fichier d'application.

Au cours d'une première étape notée 81, on recherche si la condition d'accès correspondant à ladite commande est mémorisée.

Si la condition d'accès est mémorisée, alors on lance, au cours d'une étape notée 82, l'exécution de la commande.

Si la condition d'accès n'est pas mémorisée, alors, au cours d'une étape notée 83, on demande à l'utilisateur de satisfaire à la condition d'accès.

Et alors, si l'utilisateur satisfait à la condition d'accès : au cours d'une étape notée 84, on mémorise la condition d'accès et on lance l'exécution de la commande.

Un exemple d'utilisation de la carte va maintenant être décrit.

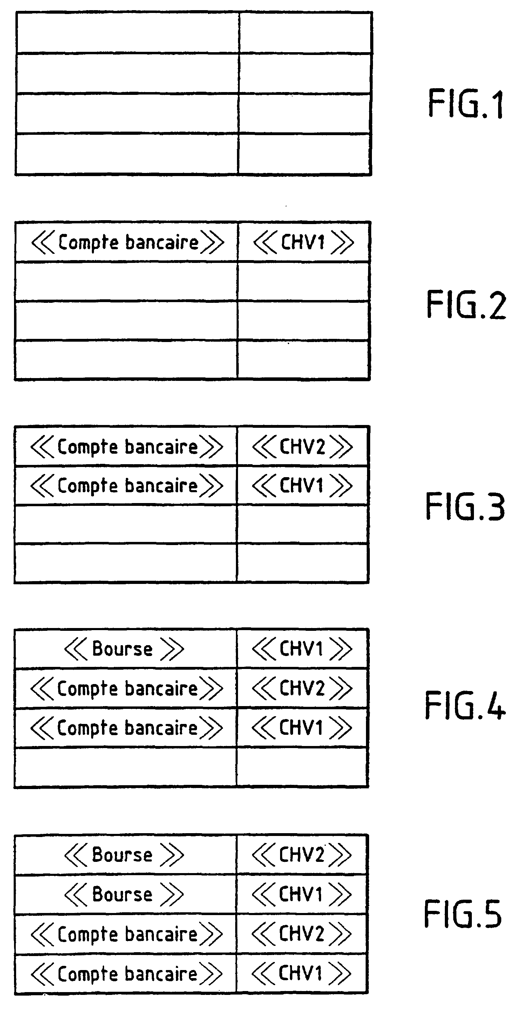

L'utilisateur insère la carte 8 dans le lecteur 12. A ce stade de l'utilisation, le tableau est initialisé par l'« OS » : le tableau est donc vide de toute donnée (figure 1).

L'utilisateur souhaite connaître le solde de son compte bancaire. Pour cela, l'utilisateur ordonne l'exécution de la commande « solde » dans le fichier « compte bancaire ».

L'« OS » recherche si la condition d'accès correspondant à la commande « solde » est mémorisée, dans notre cas l'« OS » cherche si la condition « CHV1 » du fichier d'application « compte bancaire » est mémorisée dans le tableau ; comme ce n'est pas le cas, car le tableau est vide, l'« OS » demande à l'utilisateur de satisfaire à la condition d'accès « CHV1 ». L'utilisateur entre un code confidentiel sur le clavier et l'utilisateur satisfait ainsi à la condition d'accès « CHV1 ». L'« OS » mémorise la condition d'accès dans le tableau (figure 2) et lance l'exécution de la commande « solde » : le solde du compte bancaire de l'utilisateur apparaît à l'écran.

L'utilisateur souhaite ensuite effectuer un débit de son compte bancaire. Pour cela, l'utilisateur ordonne l'exécution de la commande « débit » dans le fichier « compte bancaire ».

L'« OS » recherche si la condition d'accès correspondant à la commande « débit » est mémorisée, dans notre cas l'« OS » cherche si la condition « CHV2 » du fichier d'application « compte bancaire » est mémorisée dans le tableau ; comme ce n'est pas le cas (figure 2), l'« OS » demande à l'utilisateur de satisfaire à la condition d'accès « CHV2 ». L'utilisateur entre un code confidentiel sur le clavier et l'utilisateur satisfait ainsi à la condition d'accès « CHV2 ». L'« OS » mémorise la condition d'accès dans le tableau (figure 3) et lance l'exécution de la commande « débit ». Le distributeur fournit à l'utilisateur la somme souhaitée.

L'utilisateur souhaite alors connaître le solde de son compte bancaire et vérifier que son compte bancaire a bien été mémorisé. Pour cela, l'utilisateur ordonne l'exécution de la commande « solde » dans le fichier « compte bancaire ».

L'« OS » recherche si la condition d'accès correspondant à la commande « solde » est mémorisée, dans notre cas l'« OS » cherche si la condition « CHV 1 » du fichier d'application « compte bancaire » est mémorisée dans le tableau ; comme c'est le cas (figure 3), l'« OS » lance l'exécution de la commande « solde ». Le solde du compte bancaire de l'utilisateur apparaît à l'écran et indique bien le nouveau solde, c'est-à-dire, le montant indiqué lors de la première commande de l'opération « solde » diminué de la somme débitée lors de l'opération « débit ».

L'utilisateur souhaite connaître le solde de son compte bourse. Pour cela, l'utilisateur ordonne l'exécution de la commande « solde compte bourse » dans le fichier « bourse ».

L'« OS » recherche si la condition d'accès correspondant à la commande « solde compte bourse » est mémorisée, dans notre cas l'« OS » cherche si la condition « CHV1 » du fichier d'application « bourse » est mémorisée dans le tableau ; comme ce n'est pas le cas (figure 3), l'« OS » demande à l'utilisateur de satisfaire à la condition d'accès « CHV1 ». L'utilisateur entre un code confidentiel sur le clavier et l'utilisateur satisfait ainsi à la condition d'accès « CHV1 ». L'« OS » mémorise la condition d'accès dans le tableau (figure 4) et lance l'exécution de la commande « solde compte bourse » : le solde du compte bourse de l'utilisateur apparaît à l'écran.

L'utilisateur souhaite maintenant connaître les titres de bourse qu'il possède dans son portefeuille. Pour cela, l'utilisateur ordonne l'exécution de la commande « titre » dans le fichier « bourse ».

L'« OS » recherche si la condition d'accès correspondant à la commande « titre » est mémorisée, dans notre cas l'« OS » cherche si la condition « CHV1 » du fichier d'application « bourse » est mémorisée dans le tableau ; comme c'est le cas (figure 4), l'« OS » lance l'exécution de la commande « titre » : les titres de bourse possédés par l'utilisateur apparaissent à l'écran.

L'utilisateur souhaite maintenant vendre certains titres de bourse. Pour cela, l'utilisateur ordonne l'exécution de la commande « ordre de vente » dans le fichier « bourse ».

L'« OS » recherche si la condition d'accès correspondant à la commande « solde compte bourse » est mémorisée, dans notre cas l'« OS » cherche si la condition « CHV2 » du fichier d'application « bourse » est mémorisée dans le tableau ; comme ce n'est pas le cas (figure 4), l'« OS » demande à l'utilisateur de satisfaire à la condition d'accès « CHV2 ». L'utilisateur entre un code confidentiel sur le clavier et l'utilisateur satisfait ainsi à la condition d'accès « CHV2 ». L'« OS » mémorise la condition d'accès dans le tableau (figure 5) et lance l'exécution de la commande « ordre de vente » : l'« OS » passe ainsi l'ordre des titres que l'utilisateur vend.

L'utilisateur souhaite alors connaître le solde de son compte bourse et vérifier que son compte bourse a bien été crédité du montant des ventes des titres effectuées. Pour cela, l'utilisateur ordonne l'exécution de la commande « solde compte bourse » dans le fichier « bourse ».

L'« OS » recherche si la condition d'accès correspondant à la commande « solde compte bourse » est mémorisée, dans notre cas l'« OS » cherche si la condition « CHV1 » du fichier d'application « bourse » est mémorisée dans le tableau ; comme c'est le cas (figure 5), l'« OS » lance l'exécution de la commande « solde compte bourse ». Le solde du compte bourse de l'utilisateur apparaît à l'écran et indique bien le nouveau solde, c'est-à-dire, le montant indiqué lors de la première commande de l'opération « solde compte bourse » augmenté de la somme dégagée lors de la vente des titres de bourse.

L'utilisateur souhaite transférer une somme de son compte bourse sur son compte bancaire. Pour cela, l'utilisateur ordonne l'exécution de la commande « transfert vers compte bancaire » dans le fichier « bourse ».

L'« OS » recherche si la condition d'accès correspondant à la commande « transfert vers compte bancaire » est mémorisée, dans notre cas l'« OS » cherche si la condition « CHV2 » du fichier d'application « bourse » est mémorisée dans le tableau ; comme c'est le cas (figure 5), l'« OS » lance l'exécution de la commande « transfert vers compte bancaire ».

L'utilisateur souhaite alors connaître le solde de son compte bancaire et vérifier que son compte bancaire a bien été crédité. Pour cela, l'utilisateur ordonne l'exécution de la commande « solde » dans le fichier « compte bancaire ».

L'« OS » recherche si la condition d'accès correspondant à la commande « solde » est mémorisée, dans notre cas l'« OS » cherche si la condition « CHV1 » du fichier d'application « compte bancaire » est mémorisée dans le tableau ; comme c'est le cas (figure 5), l'« OS » lance l'exécution de la commande « crédit ». Le solde du compte bancaire de l'utilisateur apparaît à l'écran et indique bien le nouveau solde, c'est-à-dire, le montant indiqué lors de la deuxième commande de l'opération « solde » augmenté de la somme transférée lors de l'opération « transfert vers compte bancaire ».

L'utilisateur souhaite alors connaître le solde de son compte bourse et vérifier que son compte bourse a bien été débité. Pour cela, l'utilisateur ordonne l'exécution de la commande « solde compte bourse » dans le fichier « bourse ».

L'« OS » recherche si la condition d'accès correspondant à la commande « solde compte bourse » est mémorisée, dans le cas considéré l'« OS » cherche si la condition « CHV1 » du fichier d'application « bourse » est mémorisée dans le tableau ; comme c'est le cas (figure 5), l'« OS » lance l'exécution de la commande « solde compte bourse ». Le solde du compte bourse de l'utilisateur apparaît à l'écran et indique bien le nouveau solde, c'est-à-dire, le montant indiqué lors de la première commande de l'opération « solde compte bourse » diminué de la somme transférée lors de l'opération « transfert vers compte bancaire ».

L'utilisateur décide de finir d'ordonner des commandes et ferme la session carte qu'il vient d'effectuer, ce faisant le tableau va être initialisé, c'est-à-dire que toutes les données vont être effacées. Puis l'utilisateur retire la carte du lecteur.

Pour des raisons de sécurité, si en cours d'utilisation de la carte, cette dernière est retirée du lecteur, les données du tableau sont automatiquement effacées.

En définitive, l'utilisateur n'a au maximum à entrer son mot de passe qu'un nombre de fois égal au nombre de conditions d'accès distinctes qui peut probablement être inférieur au nombre de fichiers, même s'il a accès plusieurs fois, de façon discontinue, à un même fichier. Ainsi, le nombre d'entrées du mot de passe par l'utilisateur est limité.

Bien entendu, la présente invention n'est nullement limitée au mode d'exécution décrit et représenté qui n'a été donné qu'à titre d'exemple.

## Revendications

1. Procédé de gestion de commandes dans plusieurs fichiers d'application, à chaque commande dans chaque fichier d'application étant associée une condition d'accès qu'un utilisateur doit satisfaire pour que ladite commande soit exécutée, **caractérisé en ce qu'**il comprend les étapes suivantes :
- chaque commande dans chaque fichier d'application n'est exécutée que si un utilisateur a ordonné l'exécution de ladite commande et que si la condition d'accès à satisfaire par cet utilisateur pour ladite commande est mémorisée,
- les conditions satisfaites par l'utilisateur pour qu'une commande soit exécutée sont conjointement gardées en mémoire pour tous les fichiers d'application auxquels l'utilisateur a eu accès.

2. Procédé selon la revendication 1, **caractérisé en ce que**, un utilisateur ayant ordonné l'exécution d'une commande dans un fichier d'application,
on recherche si la condition d'accès correspondant à ladite commande est mémorisée,
si la condition d'accès est mémorisée alors on lance l'exécution de la commande,
sinon on demande à l'utilisateur de satisfaire à la condition d'accès et alors, si l'utilisateur satisfait à la condition d'accès, on mémorise la condition d'accès et on lance l'exécution de la commande.

3. Procédé selon la revendication 2, **caractérisé en ce que**, n désignant un entier supérieur ou égal à deux, l'utilisateur ayant satisfait à n conditions d'accès, on garde mémorisées les n dernières conditions d'accès satisfaites.

4. Procédé selon la revendication 3, **caractérisé en ce que**, une nouvelle condition d'accès étant satisfaite par l'utilisateur, ladite condition d'accès n'étant pas en mémoire, n conditions d'accès étant mémorisées, on supprime de la mémoire la condition d'accès la plus anciennement satisfaite et on mémorise la condition d'accès nouvellement satisfaite.

5. Procédé selon l'une quelconque des revendications 3 ou 4, n est égal au nombre de conditions d'accès pour l'ensemble des commandes de tous les fichiers d'application.

6. Procédé selon l'une quelconque des revendications 3 ou 4, n est supérieur au nombre de conditions d'accès pour l'ensemble des commandes de tous les fichiers d'application.

7. Procédé selon l'une quelconque des revendications 3 ou 4, n est inférieur au nombre de conditions d'accès pour l'ensemble des commandes de tous les fichiers d'application..

8. Procédé selon la revendication 1, un contact étant établi pour démarrer ledit procédé de gestion de commandes, le contact étant rompu, on efface toutes les conditions d'accès.

9. Carte (8) à puce adaptée à gérer des commandes dans plusieurs fichiers d'application, à chaque commande dans chaque fichier d'application étant associée une condition d'accès qu'un utilisateur doit satisfaire pour que ladite commande soit exécutée, **caractérisée en ce qu'**elle comporte des moyens pour :
- exécuter une commande que si un utilisateur a ordonné l'exécution de ladite commande et que si la condition d'accès à satisfaite par cet utilisateur pour ladite commande est mémorisée,
- conjointement garder en mémoire, pour tous les fichiers d'applications auxquels un utilisateur a eu accès, les conditions d'accès satisfaites par l'utilisateur.

10. Carte (8) selon la revendication 9, **caractérisée en ce que**, un utilisateur ayant ordonné l'exécution d'une commande dans un fichier d'application, elle comporte :
- des moyens adaptés à rechercher si la condition d'accès correspondant à ladite commande est en mémoire,
- des moyens adaptés à lancer l'exécution de la commande si la condition d'accès est en mémoire,
- des moyens adaptés à demander à l'utilisateur de satisfaire à la condition d'accès si la condition d'accès n'est pas en mémoire, et
- des moyens adaptés à mémoriser la condition d'accès et à lancer l'exécution de la commande si l'utilisateur satisfait à la condition d'accès.

11. Carte (8) selon la revendication 10, **caractérisée en ce que**, n désignant un entier supérieur ou égal à deux, l'utilisateur ayant satisfait à n conditions d'accès, elle comporte des moyens adaptés à garder en mémoire les n dernières conditions d'accès satisfaites.

12. Carte (8) selon la revendication 11, **caractérisée en ce que**, une nouvelle condition d'accès étant satisfaite par l'utilisateur, ladite condition d'accès n'étant pas en mémoire, n conditions d'accès étant mémorisées, elle comporte des moyens adaptés à supprimer de la mémoire la condition d'accès la plus anciennement satisfaite et à mémoriser la condition d'accès nouvellement satisfaite.

13. Carte (8) selon l'une quelconque des revendications 11 ou 12, n est égal au nombre de conditions d'accès pour l'ensemble des commandes de tous les fichiers d'application.

14. Carte (8) selon l'une quelconque des revendications 11 ou 12, n est supérieur au nombre de conditions d'accès pour l'ensemble des commandes de tous les fichiers d'application.

15. Carte (8) selon l'une quelconque des revendications 11 ou 12, n est inférieur au nombre de conditions d'accès pour l'ensemble des commandes de tous les fichiers d'application.

16. Carte (8) selon la revendication 9 **caractérisée en ce qu'**elle comporte un contact et des moyens adaptés à supprimer toutes les conditions d'accès lorsque le contact est rompu.

## Claims

1. Method for the management of commands in several application files, each command in each application file being associated with an access condition that a user must meet in order to execute said command, **characterised in that** it comprises the following steps:
- each command in each application file is only executed if a user has ordered the execution of said command and if the access condition to be met by this user for said command is stored,
- the conditions met by the user for a command to be executed are kept together in memory for all the application files which were accessed by the user.

2. Method according to claim 1, **characterised in that**, a user having ordered the execution of a command in an application file,
a search is carried out to find whether the access condition corresponding to said command is stored,
if the access condition is stored then the command is executed,
otherwise the user is requested to meet the access condition and then, if the user meets the access condition, the access condition is stored and the command is executed.

3. Method according to claim 2, **characterised in that**, n designating an integer greater than or equal to two, the user having met n access conditions, the last n access conditions met are kept in memory.

4. Method according to claim 3, **characterised in that**, a new access condition being met by the user, said access condition not being in memory, n access conditions being stored, the oldest access condition met is deleted from memory and the access condition which has just been met is stored.

5. Method according to claim 3 or 4, n is equal to the number of access conditions for all commands of all application files.

6. Method according to claim 3 or 4, n is greater than the number of access conditions for all commands of all application files.

7. Method according to claim 3 or 4, n is less than the number of access conditions for all commands of all application files.

8. Method according to claim 1, a contact being set up to start said method for the management of commands, the contact being interrupted, all access conditions are deleted.

9. Smart card (8) adapted to manage commands in several application files, each command in each application file being associated with an access condition that a user must meet in order for said command to be executed, **characterised in that** it comprises means to:
- execute a command only if a user has ordered the execution of said command and if the access condition to be met by this user for said command is stored,
- keep together in memory, for all the application files which were accessed by a user, the access conditions met by the user.

10. Card (8) according to claim 9, **characterised in that**, a user having ordered the execution of a command in an application file, it includes:
- means adapted to find out whether the access condition corresponding to said command is in memory,
- means adapted to executing the command if the access condition is in memory,
- means adapted to requesting the user to meet the access condition if the access condition is not in memory, and
- means adapted to storing the access condition and executing the command if the user meets the access condition.

11. Card (8) according to claim 10, **characterised in that**, n designating an integer greater than or equal to two, the user having met n access conditions, it includes means adapted to keeping in memory the last n access conditions met.

12. Card (8) according to claim 11, **characterised in that**, a new access condition being met by the user, said access condition not being in memory, n access conditions being stored, it includes means adapted to deleting from memory the oldest access condition met and storing the access condition which has just been met.

13. Card (8) according to claim 11 or 12, n is equal to the number of access conditions for all commands of all application files.

14. Card (8) according to claim 11 or 12, n is greater than the number of access conditions for all commands of all application files.

15. Card (8) according to claim 11 or 12, n is less than the number of access conditions for all commands of all application files.

16. Card (8) according to claim 9, **characterised in that** it includes a contact and means adapted to deleting all the access conditions when the contact is interrupted.

## Patentansprüche

1. Befehlverwaltungsverfahren in mehreren Anwendungsdateien, wobei jedem Befehl in jeder Anwendungsdatei eine Zugangsbedingung zugeordnet ist, die von einem Anwender erfüllt werden muss, damit der besagte Befehl ausgeführt wird, **dadurch gekennzeichnet, dass** es folgende Schritte umfasst:
- jeder Befehl in jeder Anwendungsdatei wird nur ausgeführt, wenn ein Anwender die Ausführung des besagten Befehls angeordnet hat und wenn die von diesem Anwender zu erfüllende Zugangsbedingung für den besagten Befehl gespeichert ist,
- die vom Anwender erfüllten Bedingungen, damit ein Befehl ausgeführt wird, werden für alle Anwendungsdateien, zu denen der Anwender Zugang hatte, gemeinsam gespeichert.

2. Verfahren nach Anspruch 1, **dadurch gekennzeichnet, dass** bei einem Anwender, der die Ausführung eines Befehls in einer Anwendungsdatei angeordnet hat,
man prüft, ob die dem besagten Befehl entsprechende Zugangsbedingung gespeichert ist,
wenn die Zugangsbedingung gespeichert ist, die Ausführung des Befehls gestartet wird,
ansonsten vom Anwender verlangt wird, die Zugangsbedingung zu erfüllen und dann, wenn der Anwender die Zugangsbedingung erfüllt, die Zugangsbedingung gespeichert und die Ausführung des Befehls gestartet wird.

3. Verfahren nach Anspruch 2, **dadurch gekennzeichnet, dass** wenn n eine ganze Zahl größer gleich zwei bezeichnet, und wenn der Anwender n Zugangsbedingungen erfüllt hat, die letzten n erfüllten Zugangsbedingungen gespeichert bleiben.

4. Verfahren nach Anspruch 3, **dadurch gekennzeichnet, dass** wenn eine neue Zugangsbedingung vom Anwender erfüllt wird und die besagte Zugangsbedingung nicht im Speicher vorhanden ist, in dem n Zugangsbedingungen gespeichert sind, man im Speicher die älteste erfüllte Zugangsbedingung löscht und die neu erfüllte Zugangsbedingung speichert.

5. Verfahren nach einem der Ansprüche 3 oder 4, bei dem n der Anzahl der Zugangsbedingungen für alle Befehle aller Anwendungsdateien entspricht.

6. Verfahren nach einem der Ansprüche 3 oder 4, bei dem n größer ist als die Anzahl der Zugangsbedingungen für alle Befehle aller Anwendungsdateien.

7. Verfahren nach einem der Ansprüche 3 oder 4, bei dem n kleiner ist als die Anzahl der Zugangsbedingungen für alle Befehle aller Anwendungsdateien.

8. Verfahren nach Anspruch 1, bei dem, nachdem ein Kontakt hergestellt wurde, um das besagte Befehlverwaltungsverfahren zu starten und wenn der Kontakt unterbrochen wurde, alle Zugangsbedingungen gelöscht werden.

9. Zur Verwaltung der Befehle in mehreren Anwendungsdateien geeignete Chipkarte (8), wobei jedem Befehl in jeder Anwendungsdatei eine Zugangsbedingung zugeordnet ist, die von einem Anwender erfüllt werden muss, damit der besagte Befehl ausgeführt wird, **dadurch gekennzeichnet, dass** sie Mittel umfasst, um:
- einen Befehl nur auszuführen, wenn ein Anwender die Ausführung des besagten Befehls angeordnet hat und wenn die von diesem Anwender für den besagten Befehl zu erfüllende Zugangsbedingung gespeichert ist,
- für alle Anwendungsdateien, zu denen ein Anwender Zugang hatte, die vom Anwender erfüllten Zugangsbedingungen gemeinsam im Speicher zu bewahren.

10. Karte (8) nach Anspruch 9, **dadurch gekennzeichnet, dass** nachdem ein Anwender die Ausführung eines Befehls in einer Anwendungsdatei angeordnet hat, diese folgende Elemente umfasst:
- geeignete Mittel, um zu prüfen, ob die dem besagten Befehl entsprechende Zugangsbedingung im Speicher vorhanden ist,
- geeignete Mittel, um die Ausführung des Befehls, wenn die Zugangsbedingung im Speicher vorhanden ist, zu starten,
- geeignete Mittel, um den Anwender aufzufordern, die Zugangsbedingung zu erfüllen, wenn die Zugangsbedingung nicht im Speicher vorhanden ist, und
- geeignete Mittel, um die Zugangsbedingung zu speichern und die Ausführung des Befehls zu starten, wenn der Anwender die Zugangsbedingung erfüllt.

11. Karte (8) nach Anspruch 10, **dadurch gekennzeichnet, dass** wenn n einer ganzen Zahl größer gleich zwei entspricht und der Anwender n Zugangsbedingungen erfüllt hat, sie geeignete Mittel umfasst, um die n letzten erfüllten Zugangsbedingungen im Speicher zu bewahren.

12. Karte (8) nach Anspruch 11, **dadurch gekennzeichnet, dass** wenn eine neue Zugangsbedingung vom Anwender erfüllt wird und diese Zugangsbedingung nicht im Speicher vorhanden ist, in dem n Zugangsbedingungen gespeichert sind, sie geeignete Mittel umfasst, um die älteste erfüllte Zugangsbedingung aus dem Speicher zu löschen und die zuletzt erfüllte Zugangsbedingung zu speichern.

13. Karte (8) nach einem der Ansprüche 11 oder 12, bei der n der Anzahl der Zugangsbedingungen für alle Befehle aller Anwendungsdateien entspricht.

14. Karte (8) nach einem der Ansprüche 11 oder 12, bei der n größer ist als die Anzahl der Zugangsbedingungen für alle Befehle aller Anwendungsdateien.

15. Karte (8) nach einem der Ansprüche 11 oder 12, bei der n kleiner ist als die Anzahl der Zugangsbedingungen für alle Befehle aller Anwendungsdateien.

16. Karte (8) nach Anspruch 9, **dadurch gekennzeichnet, dass** sie einen Kontakt und geeignete Mittel umfasst, um alle Zugangsbedingungen zu löschen, wenn der Kontakt unterbrochen wird.
